# EUROPÄISCHE PATENTSCHRIFT

(11) **EP 1 065 236 B1**
(45) Veröffentlichungstag und Bekanntmachung des Hinweises auf die Patenterteilung: **24.09.2003**
(21) Anmeldenummer: 00109617.1
(22) Anmeldetag: 05.05.2000
(51) Int. Cl.: C08G 83/00, C08G 69/36, C08G 69/02, C08G 69/08

(54) **Hochverzweigte Polyamid-Pfropfcopolymere**
Highly branched polyamide graft copolymers
Copolyamides greffés hautement ramifiés

(30) Priorität: 29.06.1999 DE 19929886; 09.02.2000 DE 10005640
(43) Veröffentlichungstag der Anmeldung: 03.01.2001
(73) Patentinhaber: Degussa AG, 40474 Düsseldorf (DE)
(72) Erfinder: Häger, Harald, Dr., 45772 Marl (DE); Richter, Ralf, Dr., 45657 Recklinghausen (DE); Oenbrink, Georg, Dr., 48249 Dülmen (DE)

(56) Entgegenhaltungen:
- DE-A- 1 720 255

## Beschreibung

Die Erfindung betrifft hochverzweigte Polyamid-Pfropfcopolymere, die aus einem Polyamin-Teil und aufgepfropften Polyamid-Ketten bestehen.

Pfropfcopolymere auf Basis von Polyamin und Polyamid sind bekannt. Sie können beispielsweise durch kationische Polymerisation von Caprolactam in Gegenwart von Polyethyleniminhydrochlorid-Dendrimeren -Dendrimeren als Kernmolekül hergestellt werden (J. M. Warakomski, Chem. Mater. 1992, 4, 1000 - 1004). Derartige PA 6-Dendrimere besitzen, verglichen mit linearem PA 6, eine deutlich verringerte Schmelze- und Lösungsviskosität, aber unveränderte Zugfestigkeit, Steifigkeit, Schmelzpunkte, Schmelzwärmen und Barrierewirkung gegenüber Sauerstoff.

Pfropfcopolymere auf Basis von Polyvinylamin und Polyamid sind aus der US-PS 2 615 863 bekannt. In der US-PS 3 442 975 sind Pfropfcopolymere beschrieben, die durch Polymerisation von Lactamen in Gegenwart von hochmolekularem Polyethylenimin hergestellt werden.

Die DE-OS 19 15 772 beschreibt Blends aus einem Polyimin/Polyamid-Pfropfcopolymer sowie einem Polyolefin und/oder Polyester, die zu leicht färbbaren Fasern verarbeitet werden.

Schließlich werden in der DE-OS 196 54 179 H-förmige Polyamide beschrieben, die aus Lactamen bzw. Aminocarbonsäuren, einem mindestens trifunktionellen Amin, difunktionellen Carbonsäuren und monofunktioneller Carbonsäure hergestellt werden, wobei die beiden letzteren zueinander und zu den funktionellen Gruppen des mindestens trifunktionellen Amins in einem bestimmten Verhältnis stehen. Die Produkte weisen eine verbesserte Schmelzestabilität auf.

Bei vielen Anwendungen, für die man derartige Polyamid- Pfropfcopolymere einsetzen möchte, hat sich allerdings herausgestellt, daß diese keine ausreichende Lösemittel- und Kraftstoffbeständigkeit besitzen. Insbesondere die Hydrolyse- und Alkoholysebeständigkeit und die Spannungsrißbeständigkeit, aber auch das Quellungsverhalten und damit verbunden die Dimensionsbeständigkeit sowie die Sperrwirkung gegen Diffusion sind in vielen Fällen unbefriedigend. Daher stellte sich die Aufgabe, lösemittel- und kraftstoffbeständigere Polyamin-Polyamid- Pfropfcopolymere herzustellen.

Diese Aufgabe wird erfindungsgemäß mit einem Pfropfcopolymer gelöst, das unter Verwendung folgender Monomere hergestellt wird:
a) 0,5 bis 25 Gew.-%, bevorzugt 1 bis 20 Gew.-% und besonders bevorzugt 1,5 bis 16 Gew.-%, bezogen auf das Pfropfcopolymer, eines Polyamins mit mindestens 11 Stickstoffatomen und einem zahlenmittleren Molekulargewicht Mₙ von mindestens 500 g/mol und bevorzugt von mindestens 800 g/mol;
b) polyamidbildende Monomere, ausgewählt aus Lactamen und ω-Aminocarbonsäuren;
c) Oligocarbonsäure, ausgewählt aus 0,015 bis 3 Mol-% Dicarbonsäure und 0,01 bis 1,2 Mol-% Tricarbonsäure mit 6 bis 24 C-Atomen, jeweils bezogen auf Lactam bzw. ω-Aminocarbonsäure,
wobei die Aminogruppenkonzentration des Pfropfcopolymers im Bereich von 100 bis 2500 mmol/kg liegt.

Die angegebene Obergrenze für Dicarbonsäure bzw. Tricarbonsäure soll nur sicherstellen, daß kein vernetztes, sondern ein thermoplastisches Pfropfcopolymer entsteht. Nach derzeitigen Kenntnissen sind diese Obergrenzen ein guter Richtwert. In Einzelfallen, vor allem bei Einsatz relativ hoher Polyaminmengen, können aber noch höhere Oligocarbonsäuremengen zugesetzt werden. Derartige Pfropfcopolymere liegen noch im Rahmen der Erfindung.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992)
- Polyamine, die aus alternierenden Polyketonen hergestellt werden (DE-OS 196 54 058)
- Dendrimere wie beispielsweise

   ((H₂N-(CH₂)₃)₂N-(CH₂)₃)₂-N(CH₂)₂-N((CH₂)₂-N((CH₂)₃-NH₂)₂)₂

   (DE-A-196 54 179) oder
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000-1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 -1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, nimmt man vorzugsweise 0,02 bis 0,9 Mol-%, besonders bevorzugt 0,025 bis 0,6 Mol-%, ganz besonders bevorzugt 0,03 bis 0,4 Mol-% und insbesondere 0,04 bis 0,25 Mol-%. Tricarbonsäure wird vor allem dann verwendet, wenn Extrusionsformmassen mit erhöhter Schmelzesteifigkeit hergestellt werden sollen.

Zusätzlich können, falls gewünscht, aliphatische, alicyclische, aromatische, aralkylische und/oder alkylarylsubsitituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erforderlich, darauf zu achten, daß das Pfropfcopolymer einen substantiellen Anteil an Aminogruppen besitzt. Vorzugsweise liegt die Aminogruppenkonzentration des Pfropfcopolymers im Bereich von 150 bis 1500 mmol/kg, besonders bevorzugt im Bereich von 250 bis 1300 mmol/kg und ganz besonders bevorzugt im Bereich von 300 bis 1100 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die erfindungsgemäßen Pfropfcopolymere können nach verschiedehen Verfahren hergestellt werden.

Eine Möglichkeit besteht darin, Lactam bzw. ω-Aminocarbonsäure und Polyamin zusammen vorzugeben und die Polymerisation bzw. die Polykondensation durchzuführen. Die Oligocarbonsäure kann entweder am Anfang oder im Verlauf der Reaktion zugegeben werden.

Ein weiteres Verfahren besteht darin, daß in einem zweistufigen Prozeß zuerst die Lactamspaltung und Präpolymerisation in Gegenwart von Wasser durchgeführt wird (alternativ werden die entsprechenden ω-Aminocarbonsäuren direkt eingesetzt und präpolymerisiert); im zweiten Schritt wird das Polyamin zugegeben, während die Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein anderes mögliches Verfahren besteht im hydrolytischen Abbau eines Polyamids, das von einem oder mehreren Lactamen bzw. ω-Aminocarbonsäuren hergeleitet ist, zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die Oligocarbonsäure bereits einpolykondensiert ist Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und insbesondere kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, daß eine Reaktion von Aminoendgruppen miteinander unter Ammoniakabspaltung und Kettenverknüpfung stattfindet. Hierdurch wird das Molekulargewicht weiter erhöht, was insbesondere für Extrusionsformmassen vorteilhaft ist.

Falls man die Reaktion nicht in der Schmelze zu Ende führen will, kann das ultrahochverzweigte Polyamid gemäß dem Stand der Technik auch in fester Phase nachkondensiert werden.

Die erfindungsgemäßen Pfropfcopolymeren können für Spritzguß- oder Extrusionsformmassen verwendet werden. Sie können auch als Blendkomponente zur Modifikation von Gebrauchseigenschaften oder als Schmelzkleber eingesetzt werden.

Die in den Beispielen aufgeführten Ergebnisse wurden mit Hilfe nachstehender Meßverfahren bestimmt.

Zur Bestimmung der Carboxylendgruppen wurde 1 g Pfropfcopolymer in 50 ml Benzylalkohol unter Stickstoffabdeckung bei 165 °C gelöst. Die Lösezeit betrug maximal 20 min. Die Lösung wurde mit einer Lösung von KOH in Ethylenglykol (0,05 mol KOH/l) gegen Phenolphthalein bis zum Farbumschlag titriert.

Zur Bestimmung der Aminogruppen wurde 1 g des Pfropfcopolymers in 50 ml m-Kresol bei 25 °C gelöst. Die Lösung wurde mit Perchlorsäure potentiometrisch titriert.

Die Bestimmung der Lösungsviskosität ηᵣₑₗ (relative Viskosität) erfolgte unter Verwendung einer 0,5 gew.-%igen m-Kresol-Lösung bei 25 °C gemäß DIN 53727/ISO 307.

### Vergleichsbeispiel 1 (ohne Oligocarbonsäure):

4,75 kg Laurinlactam wurden in einem Aufheizkessel bei 180 bis 210 °C aufgeschmolzen und in einen druckfesten Polykondensationskessel überführt. Dann wurden 250 ml Wasser und 57 ppm Hypophosphorige Säure zugegeben. Die Laurinlactamspaltung wurde bei 280 °C unter dem sich einstellenden Eigendruck durchgeführt. Anschließend wurde innerhalb von 3 h auf einen Restwasserdampfdruck von 3 bar entspannt und 250 g Polyethylenimin (Lupasol G 100, Polyethylenimin der BASF AG, Ludwigshafen) zugegeben. Danach wurde auf Normaldruck entspannt und unter Überleiten von Stickstoff 2 h bei 250 °C polykondensiert. Die klare Schmelze wurde über eine Schmelzepumpe als Strang ausgetragen, im Wasserbad abgekühlt und anschließend granuliert.
ηᵣₑₗ: 1,58
Schmelztemperatur Tₘ: 170°C
Aminogruppenkonzentration: 879 mmol/kg
Carboxylendgruppenkonzentration: < 10 mmol/kg

### Beispiel 1 (mit 0,27 Mol-% Dodecandisäure bezogen auf Laurinlactam):

Es wurde wie im Vergleichsbeispiel 1 gearbeitet mit dem alleinigen Unterschied, daß zusammen mit dem Polyethylenimin 15 g Dodecandisäure zugegeben wurde.
ηᵣₑₗ: 1,52
Schmelztemperatur Tₘ: 170 °C
Aminogruppenkonzentration: 837 mmol/kg
Carboxylendgruppenkonzentration: < 10 mmol/kg

### Beispiel 2 (mit 0,15 Mol-% Trimesinsäure bezogen auf Laurinlactam):

Es wurde wie im Vergleichsbeispiel 1 gearbeitet mit dem alleinigen Unterschied, daß zusammen mit dem Polyethylenimin 7,5 g Trimesinsäure zugegeben wurde.
ηᵣₑₗ: 1,56
Schmelztemperatur Tₘ: 173 °C
Aminogruppenkonzentration: 790 mmol/kg
Carboxylendgruppenkonzentration: <10 mmol/kg

In der Tabelle 1 wird die Lösemittelbeständigkeit der hergestellten Produkte miteinander verglichen. Dazu wurden Granalien in einem Gemisch aus 42,5 Vol.-% Toluol, 42,5 Vol.-% Isooctan und 15 Vol.-% Methanol bei 80 °C 5 bzw. 10 Tage gelagert und anschließend getrocknet. Dann wurde die relative Viskosität ηᵣₑₗ unter Verwendung einer 0,5 gew.-%igen Lösung in m-Kresol bei 25 °C gemäß DIN 53727/ISO 307 bestimmt. An den erfindungsgemäßen Produkten war kein alkoholytischer Abbau feststellbar.

**Tabelle 1**

| Lösemittelbeständigkeit | | | |
|---|---|---|---|
| Lagerungsdauer [Tage] | Vergleichsbeispiel 1 ηᵣₑₗ | Beispiel 1 ηᵣₑₗ | Beispiel 2 ηᵣₑₗ |
| 0 | 1,58 | 1,52 | 1,56 |
| 5 | 1,42 | 1,52 | 1,56 |
| 10 | 1,38 | 1,52 | 1,56 |

### Beispiel 3 (mit 1,2 Mol-% Dodecandisäure bezogen auf Laurinlactam):

47,75 kg Laurinlactam und 0,675 kg Dodecandisäure wurden in einem Aufheizkessel bei 180 bis 210 °C aufgeschmolzen und in einen druckfesten Polykondensationskessel überführt. Danach wurden 2,5 kg Wasser und 57 ppm Hypophosphorige Säure zugegeben. Die Laurinlactamspaltung wurde bei 280 °C unter dem sich einstellenden Eigendruck durchgeführt. Anschließend wurde innerhalb von 3 h auf einen Restwasserdampfdruck von 5 bar entspannt und 2,25 kg Polyethylenimin (Lupasol G 100, BASF AG, Ludwigshafen) zugegeben. Danach wurde auf Normaldruck entspannt und unter Überleiten von Stickstoff 2 h bei 280°C polykondensiert. Die klare Schmelze wurde über eine Spinnradpumpe als Strang ausgetragen, im Wasserbad abgekühlt und anschließend granuliert.
ηᵣₑₗ: 1,60
Schmelztemperatur Tₘ: 172 °C
Aminogruppenkonzentration: 720 mmol/kg
Carboxylendgruppenkonzentration: 16 mmol/kg

## Patentansprüche

1. Pfropfcopolymer, das unter Verwendung folgender Monomere hergestellt wird:
a) 0,5 bis 25 Gew.-%, bezogen auf das Pfropfcopolymer, eines Polyamins mit mindestens 11 Stickstoffatomen und einem zahlenmittleren Molekulargewicht Mₙ von mindestens 500 g/mol;
b) polyamidbildende Monomere, ausgewählt aus Lactamen und ω-Aminocarbonsäuren;
c) Oligocarbonsäure, ausgewählt aus 0,015 bis 3 Mol-% Dicarbonsäure und 0,01 bis 1,2 Mol-% Tricarbonsäure mit 6 bis 24 C-Atomen, jeweils bezogen auf Lactam bzw. ω-Aminocarbonsäure,
wobei die Aminogruppenkonzentration des Pfropfcopolymers im Bereich von 100 bis 2500 mmol/kg liegt.

2. Pfropfcopolymer gemäß Anspruch 1,
**dadurch gekennzeichnet,**
**daß** die Oligocarbonsäure ausgewählt ist aus 0,03 bis 2,2 Mol-% Dicarbonsäure und 0,02 bis 0,9 Mol-% Tricarbonsäure.

3. Pfropfcopolymer gemäß Anspruch 1,
**dadurch gekennzeichnet,**
**daß** die Oligocarbonsäure ausgewählt ist aus 0,05 bis 1,5 Mol-% Dicarbonsäure und 0,025 bis 0,6 Mol-% Tricarbonsäure.

4. Pfropfcopolymer gemäß Anspruch 1,
**dadurch gekennzeichnet,**
**daß** die Oligocarbonsäure ausgewählt ist aus 0,1 bis 1 Mol-% Dicarbonsäure und 0,03 bis 0,4 Mol-% Tricarbonsäure.

5. Pfropfcopolymer gemäß Anspruch 1,
**dadurch gekennzeichnet,**
**daß** die Oligocarbonsäure ausgewählt ist aus 0,15 bis 0,65 Mol-% Dicarbonsäure und 0,04 bis 0,25 Mol-% Tricarbonsäure.

6. Pfropfcopolymer gemäß einem der vorhergehenden Ansprüche,
**dadurch gekennzeichnet,**
**daß** die Aminogruppenkonzentration im Bereich von 150 bis 1500 mmol/kg liegt.

7. Pfropfcopolymer gemäß Anspruch 6,
**dadurch gekennzeichnet,**
**daß** die Aminogruppenkonzentration im Bereich von 250 bis 1300 mol/kg liegt

8. Pfropfcopolymer gemäß Anspruch 6.
**dadurch gekennzeichnet,**
**daß** die Aminogruppenkonzentration im Bereich von 300 bis 1100 mmol/kg liegt.

9. Pfropfcopolymer gemäß einem der vorhergehenden Ansprüche,
**dadurch gekennzeichnet,**
**daß** das Polyamin ein verzweigtes Polyethylenimin ist, das folgende Aminogruppenverteilung besitzt:
25 bis 46 % primäre Aminogruppen
30 bis 45 % sekundäre Aminogruppen und
16 bis 40 % tertiäre Aminogruppen.

10. Pfropfcopolymer gemäß einem der vorhergehenden Ansprüche,
**dadurch gekennzeichnet,**
**daß** dessen Säurezahl kleiner ist als 40 mmol/kg.

## Claims

1. A graft copolymer prepared using the following monomers:
a) from 0.5 to 25% by weight, based on the graft copolymer, of a polyamine having at least 11 nitrogen atoms and a number-average molar mass Mₙ of at least 500 g/mol;
b) polyamide-forming monomer selected from the group consisting of lactams and ω-aminocarboxylic acids,
c) oligocarboxylic acid selected from the group consisting of from 0.015 to 3 mol% of dicarboxylic acid and from 0.01 to 1.2 mol% of tricarboxylic acid having from 6 to 24 carbon atoms, in each case based on lactam and/or ω-aminocarboxylic acid,
the amino group concentration in the graft copolymer being from 100 to 2500 mmol/kg.

2. A graft copolymer according to claim 1, **characterised in that** the oligocarboxylic acid has been selected from the group consisting of from 0.03 to 2.2 mol% of dicarboxylic acid and from 0.02 to 0.9 mol% of tricarboxylic acid.

3. A graft copolymer according to claim 1,
**characterised in that**
the oligocarboxylic acid has been selected from the group consisting of from 0.05 to 1.5 mol% of dicarboxylic acid and from 0.025 to 0.6 mol% of tricarboxylic acid.

4. A graft copolymer according to claim 1,
**characterised in that**
the oligocarboxylic acid has been selected from the group consisting of from 0.1 to 1 mol% of dicarboxylic acid and from 0.03 to 0.4 mol% of tricarboxylic acid.

5. A graft copolymer according to claim 1,
**characterised in that**
the oligocarboxylic acid has been selected from the group consisting of from 0.15 to 0.65 mol% of dicarboxylic acid and from 0.04 to 0.25 mol% of tricarboxylic acid.

6. A graft copolymer according to any one of the preceding claims,
**characterised in that**
the amino group concentration is from 150 to 1500 mmol/kg.

7. A graft copolymer according to claim 6,
**characterised in that**
the amino group concentration is from 250 to 1300 mmol/kg.

8. A graft copolymer according to claim 6,
**characterised in that**
the amino group concentration is from 300 to 1100 mmol/kg.

9. A graft copolymer according to any one of the preceding claims,
**characterised in that**
the polyamine is a branched polyethyleneimine which has the following amino group distribution:
from 25 to 46% of primary amino groups,
from 30 to 45% of secondary amino groups, and
from 16 to 40% of tertiary amino groups.

10. A graft copolymer according to any one of the preceding claims,
**characterised in that**
its acid number is below 40 mmol/kg.

## Revendications

1. Copolymère greffé, fabriqué en utilisant les monomères suivants:
a) de 0,5 à 25 % en poids, en fonction du copolymère greffé, d'une polyamine ayant au moins 11 atomes d'azote et un poids moléculaire moyen Mₙ d'au moins 500 g/mol ;
b) monomères formant un polyamide, choisis parmi les lactames et les acides ω-aminocarboxyliques ;
c) acide oligocarboxylique, choisi parmi l'acide dicarboxylique de 0,015 à 3 % en mole et l'acide tricarboxylique de 0,01 à 1,2 % en mole, comportant de 6 à 24 atomes de C, respectivement en fonction du lactame et de l'acide ω-aminocarboxylique,
la concentration des groupes amino du copolymère greffé se situant dans la gamme de 100 à 2500 mmol/kg.

2. Copolymère greffé selon la revendication 1,
**caractérisé en ce que**
l'acide oligocarboxylique est choisi parmi l'acide dicarboxylique de 0,03 à 2,2 % en mole et l'acide tricarboxylique de 0,02 à 0,9 % en mole.

3. Copolymère greffé selon la revendication 1,
**caractérisé en ce que**
l'acide oligocarboxylique est choisi parmi l'acide dicarboxylique de 0,05 à 1,5 % en mole et l'acide tricarboxylique de 0,025 à 0,6 % en mole.

4. Copolymère greffé selon la revendication 1,
**caractérisé en ce que**
l'acide oligocarboxylique est choisi parmi l'acide dicarboxylique de 0,1 à 1 % en mole et l'acide tricarboxylique de 0,03 à 0,4 % en mole.

5. Copolymère greffé selon la revendication 1,
**caractérisé en ce que**
l'acide oligocarboxylique est choisi parmi l'acide dicarboxylique de 0,15 à 0,65 % en mole et l'acide tricarboxylique de 0,04 à 0,25 % en mole.

6. Copolymère greffé selon l'une des revendications précédentes,
**caractérisé en ce que**
la concentration des groupes amino se situe dans la gamme de 150 à 1500 mmol/kg.

7. Copolymère greffé selon la revendication 6,
**caractérisé en ce que**
la concentration des groupes amino se situe dans la gamme de 250 à 1300 mol/kg.

8. Copolymère greffé selon la revendication 6,
**caractérisé en ce que**
la concentration des groupes amino se situe dans la gamme de 300 à 1100 mmol/kg.

9. Copolymère greffé selon l'une des revendications précédentes,
**caractérisé en ce que**
la polyamine est une polyéthylèneimine ramifiée, qui possède la répartition suivante des groupes amino:
25 à 46 % de groupes amino primaires
30 à 45 % de groupes amino secondaires et
16 à 40 % de groupes amino tertiaires.

10. Copolymère greffé selon l'une des revendications précédentes,
**caractérisé en ce que**
l'indice d'acidité est inférieur à 40 mmol/kg.
